# EUROPEAN PATENT APPLICATION

(11) **EP 4 568 133 A1**
(43) Date of publication of application: **11.06.2025**
(21) Application number: 23870744.2
(22) Date of filing: 25.09.2023
(51) Int. Cl.: H04B 7/06

(54) **COMMUNICATION METHOD AND APPARATUS**

(30) Priority: 30.09.2022 CN 202211216343
(71) Applicant: Huawei Technologies Co., Ltd., Shenzhen, Guangdong 518129 (CN)
(72) Inventor: MA, Yunsi, Shenzhen, Guangdong 518129 (CN); RUAN, Wei, Shenzhen, Guangdong 518129 (CN); TANG, Yunshuai, Shenzhen, Guangdong 518129 (CN)
(74) Representative: Körber, Martin Hans
(86) International application number: PCT/CN2023/121211
(87) International publication number: WO 2024/067515

(57) **Abstract**

This application relates to the field of communication technologies, and discloses a communication method and apparatus. The method includes: A first communication apparatus transmits a plurality of first frames on a first frequency domain resource, where the plurality of first frames are used for first beamforming training; and the first communication apparatus receives a second frame from a second communication apparatus on a second frequency domain resource, where the second frame includes a result of the first beamforming training, and a frequency corresponding to the first frequency domain resource is higher than a frequency corresponding to the second frequency domain resource. According to the method, the first communication apparatus and the second communication apparatus may transmit, in a high frequency band, a sweep frame for beamforming training, and transmit, in a low frequency band, a feedback frame for the beamforming training, to complete the beamforming training through mutual cooperation between the low frequency band and the high frequency band. This helps improve transmission efficiency in the high frequency band.

## Description

### CROSS-REFERENCE TO RELATED APPLICATIONS

This application claims priority to Chinese Patent Application No. 202211216343.2, filed with the China National Intellectual Property Administration on September 30, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Currently, most devices in a wireless local area network (wireless local area network, WLAN) operate in low frequency bands. As more devices use the low frequency bands, spectrum resources in the low frequency bands become very crowded. Therefore, a current focus is on using high frequency bands (for example, a millimeter-wave band) to obtain more abundant available spectrum resources.

Because a path loss of the millimeter-wave band is large, a beamforming technology is introduced in the millimeter-wave band to offset the path loss. To be specific, a signal is enhanced in a target direction, and a signal is weakened in a non-target direction or a direction of an obstacle, to improve a transmission distance and system performance. Specifically, in the beamforming technology, a transmit end in millimeter-wave communication may transmit a communication signal in a form of a beam in a transmit direction, to concentrate transmit power in the transmit direction, and a receive end in millimeter-wave communication may also receive a communication signal in a receive direction. Directional communication may be implemented by using the beamforming technology, so that a path loss can be well offset.

To use the beamforming technology, beamforming training needs to be performed between an initiator and a responder. However, in the beamforming training, the initiator and the responder need to exchange a large quantity of beamforming frames in a high frequency band. This affects transmission efficiency in the high frequency band.

### SUMMARY

This application provides a communication method and apparatus, to complete beamforming training through mutual cooperation between a low frequency band and a high frequency band. This helps improve transmission efficiency in the high frequency band.

According to a first aspect, an embodiment of this application provides a communication method, and the communication method may be applied to a first communication apparatus. The method includes: The first communication apparatus transmits a plurality of first frames on a first frequency domain resource, where the plurality of first frames are used for first beamforming training; and the first communication apparatus receives a second frame from a second communication apparatus on a second frequency domain resource, where the second frame includes a result of the first beamforming training, and a frequency corresponding to the first frequency domain resource is higher than a frequency corresponding to the second frequency domain resource.

According to the foregoing method, the first communication apparatus and the second communication apparatus may transmit a sweep frame for beamforming training on the first frequency domain resource (for example, a frequency domain resource in a high frequency band), and transmit a feedback frame for the beamforming training on the second frequency domain resource (for example, a frequency domain resource in a low frequency band), to complete the beamforming training through mutual cooperation between the low frequency band and the high frequency band. This helps improve transmission efficiency in the high frequency band. In addition, because a coverage area of the low frequency band is large, transmission reliability of a beamforming training result is improved.

In a possible design, the method further includes: The first communication apparatus transmits a third frame to the second communication apparatus on the second frequency domain resource, where the third frame indicates time domain locations in which the plurality of first frames are located.

In this way, before performing the first beamforming training, the first communication apparatus may transmit the third frame (for example, scheduling information) to the second communication apparatus in a low frequency band, and the scheduling information indicates a time domain location of beamforming training (that is, the time domain locations of the plurality of first frames), so that the second communication apparatus receives the first frame based on the time domain locations of the plurality of first frames. This avoids high power consumption of the second communication apparatus caused by long-time detection because the second communication apparatus does not know when the first communication apparatus transmits the first frame.

In a possible design, the method further includes: The first communication apparatus receives a fourth frame from the second communication apparatus on the second frequency domain resource, where the fourth frame is used to request the time domain locations in which the plurality of first frames are located.

In a possible design, the method further includes: The first communication apparatus transmits an acknowledgment frame of the second frame to the second communication apparatus on the second frequency domain resource.

In this way, an acknowledgment frame for beamforming training may be transmitted in a low frequency band. This helps improve transmission efficiency in a high frequency band.

In a possible design, that the first communication apparatus transmits the plurality of first frames on the first frequency domain resource includes: The first communication apparatus transmits the plurality of first frames in a broadcast manner on the first frequency domain resource.

In this way, the first communication apparatus transmits the plurality of first frames in the broadcast manner, so that beamforming training between the first communication apparatus and a plurality of communication apparatuses can be simultaneously implemented. This helps improve beamforming training efficiency and reduce power consumption of the first communication apparatus.

In a possible design, before the first communication apparatus transmits the plurality of first frames on the first frequency domain resource, the method further includes: The first communication apparatus transmits a plurality of fifth frames on the first frequency domain resource, where the plurality of fifth frames are used for second beamforming training.

In a possible design, that the first communication apparatus transmits the plurality of fifth frames on the first frequency domain resource includes: The first communication apparatus transmits the plurality of fifth frames in the broadcast manner on the first frequency domain resource.

According to a second aspect, an embodiment of this application provides a communication method, and the method may be applied to a second communication apparatus. In the method, the second communication apparatus receives at least one first frame from a first communication apparatus on a first frequency domain resource, where the at least one first frame is used for first beamforming training; and the second communication apparatus transmits a second frame to the first communication apparatus on a second frequency domain resource, where the second frame includes a result of the first beamforming training, and a frequency corresponding to the first frequency domain resource is higher than a frequency corresponding to the second frequency domain resource.

In a possible design, the method further includes: The second communication apparatus receives a third frame from the first communication apparatus on the second frequency domain resource, where the third frame indicates a time domain location in which the at least one first frame is located.

In a possible design, the method further includes: The second communication apparatus transmits a fourth frame to the first communication apparatus on the second frequency domain resource, where the fourth frame is used to request the time domain location in which the at least one first frame is located.

In a possible design, the method further includes: The second communication apparatus receives an acknowledgment frame of the second frame from the first communication apparatus on the second frequency domain resource.

In a possible design, that the second communication apparatus receives the at least one first frame from the first communication apparatus on the first frequency domain resource includes: The second communication apparatus receives at least one fifth frame from the first communication apparatus on the first frequency domain resource, where the at least one fifth frame is used for second beamforming training; the second communication apparatus determines a result of the second beamforming training based on receiving quality of the at least one fifth frame, where the result indicates an optimal receive antenna and/or an optimal receive sector that are/is of the second communication apparatus on the first frequency domain resource and that correspond/corresponds to the first communication apparatus, and the second communication apparatus receives the at least one first frame from the first communication apparatus on the first frequency domain resource based on the optimal receive antenna and/or the optimal receive sector.

It may be understood that the method described in the second aspect corresponds to the method described in the first aspect. For beneficial effects of related technical features in the second aspect, refer to descriptions in the first aspect. Details are not described again.

According to a third aspect, this application provides a communication apparatus. The communication apparatus has a function of implementing the first aspect or the second aspect. For example, the communication apparatus includes a corresponding module, unit, or means (means) for performing an operation in the first aspect or the second aspect. The module, unit, or means may be implemented by using software, may be implemented by using hardware, or may be implemented by hardware by executing corresponding software.

In a possible design, the communication apparatus includes a processing unit and a communication unit, the communication unit may be configured to receive/transmit a signal, to implement communication between the communication apparatus and another apparatus, and the processing unit may be configured to perform some internal operations of the communication apparatus. Functions performed by the processing unit and the communication unit may correspond to operations in the first aspect or the second aspect.

In a possible design, the communication apparatus includes a processor, and the processor may be coupled to a memory. The memory may store a necessary computer program or necessary instructions for implementing the functions in the first aspect or the second aspect. The processor may execute the computer program or the instructions stored in the memory. When the computer program or the instructions are executed, the communication apparatus is enabled to implement the method in any possible design or implementation of the first aspect or the second aspect.

In a possible design, the communication apparatus includes a processor and a memory, and the memory may store a necessary computer program or necessary instructions for implementing the functions in the first aspect or the second aspect. The processor may execute the computer program or the instructions stored in the memory. When the computer program or the instructions are executed, the communication apparatus is enabled to implement the method in any possible design or implementation of the first aspect or the second aspect.

In a possible design, the communication apparatus includes a processor and an interface circuit, and the processor is configured to: communicate with another apparatus via the interface circuit, and perform the method in any possible design or implementation of the first aspect or the second aspect.

It may be understood that in the third aspect, the processor may be implemented by using hardware or software. When the processor is implemented by using hardware, the processor may be a logic circuit, an integrated circuit, or the like. When the processor is implemented by using software, the processor may be a general-purpose processor, and is implemented by reading software code stored in the memory. In addition, there may be one or more processors, and one or more memories. The memory may be integrated with the processor, or the memory and the processor are disposed separately. In a specific implementation process, the memory and the processor may be integrated into a same chip, or may be disposed on different chips. A type of the memory and a manner of disposing the memory and the processor are not limited in this embodiment of this application.

According to a fourth aspect, this application provides a communication system. The communication system may include a first communication apparatus and a second communication apparatus. The first communication apparatus is configured to perform the communication method provided in the first aspect, and the second communication apparatus is configured to perform the communication method provided in the second aspect.

According to a fifth aspect, this application provides a computer-readable storage medium. The computer-readable storage medium stores computer-readable instructions, and when a computer reads and executes the computer-readable instructions, the computer is enabled to perform the method in any one of the possible designs of the first aspect or the second aspect.

According to a sixth aspect, this application provides a computer program product. When a computer reads and executes the computer program product, the computer is enabled to perform the method in any one of the possible designs of the first aspect or the second aspect.

According to a seventh aspect, this application provides a chip. The chip includes a processor, and the processor is coupled to a memory, and is configured to read and execute a software program stored in the memory, to implement the method in any one of the possible designs of the first aspect or the second aspect.

### BRIEF DESCRIPTION OF DRAWINGS

FIG. 1 is a diagram of a network architecture to which an embodiment of this application is applicable;
FIG. 2 is a diagram of an AP MLD according to an embodiment of this application;
FIG. 3 is a diagram of links between an AP MLD and a non-AP MLD according to an embodiment of this application;
FIG. 4 is a diagram of a possible SLS process according to an embodiment of this application;
FIG. 5A and FIG. 5B each are a schematic flowchart corresponding to a communication method according to Embodiment 1 of this application;
FIG. 6A and FIG. 6B each are a schematic flowchart corresponding to a communication method according to Embodiment 1 of this application;
FIG. 7 is a possible example block diagram of an apparatus according to an embodiment of this application;
FIG. 8 is a diagram of a structure of an AP according to an embodiment of this application; and
FIG. 9 is a diagram of a structure of a STA according to an embodiment of this application.

### DESCRIPTION OF EMBODIMENTS

The following describes technical solutions in embodiments of this application with reference to accompanying drawings in embodiments of this application.

Embodiments of this application may be applied to a WLAN, for example, may be applied to any protocol in the Institute of Electrical and Electronics Engineers (institute of electrical and electronics engineers, IEEE) 802.11 series protocols currently used in the WLAN. The WLAN may include one or more basic service sets (basic service set, BSS), and network nodes in the basic service set include an access point (access point, AP) and a station (station, STA). In addition, IEEE 802.11ad introduces a personal basic service set (personal basic service set, PBSS) and a personal basic service set control point (PBSS control point, PCP) on a basis of the original BSS. Each personal basic service set may include one AP/PCP and a plurality of non-APs/PCPs associated with the AP/PCP. In embodiments of this application, the non-AP/PCP may be referred to as a STA, and the PCP may be understood as a name of a role of the AP in the PBSS.

Embodiments of this application may be also applicable to a wireless local area network such as an internet of things (internet of things, IoT) network or a vehicle to everything (vehicle to X, V2X) network. Certainly, embodiments of this application may be further applicable to other possible communication systems, for example, a long term evolution (long term evolution, LTE) communication system, an LTE frequency division duplex (frequency division duplex, FDD) communication system, an LTE time division duplex (time division duplex, TDD) communication system, a universal mobile telecommunication system (universal mobile telecommunication system, UMTS), a worldwide interoperability for microwave access (worldwide interoperability for microwave access, WiMAX) communication system, a 5th generation (5th generation, 5G) communication system, a future evolved communication system, and the like.

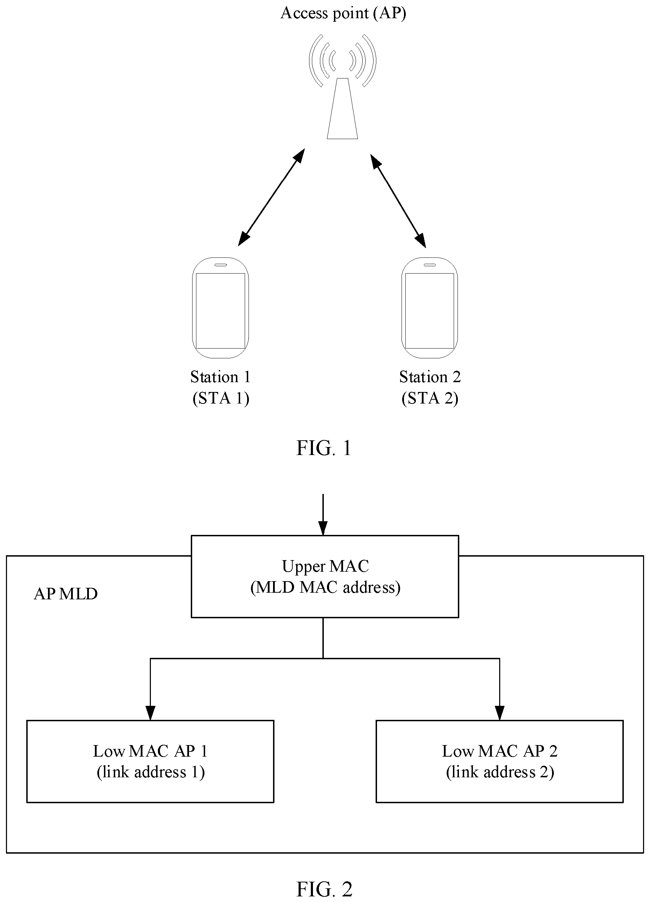

The following uses an example in which embodiments of this application are applicable to a WLAN. FIG. 1 is a diagram of a network architecture of a WLAN to which an embodiment of this application is applicable. In FIG. 1, an example in which the WLAN includes one AP and two STAs is used. A STA associated with the AP can receive a radio frame transmitted by the AP, and can also transmit a radio frame to the AP. Embodiments of this application are described by using communication between the AP and the STA as an example. It may be understood that embodiments of this application may also be applicable to communication between APs, for example, the APs may communicate with each other through a distributed system (distributed system, DS), and may also applicable to communication between STAs.

The AP may be an access point for a terminal device (such as a mobile phone) to access a wired (or wireless) network, and is mainly deployed at home, in a building, and in a campus. A typical coverage radius of the AP is tens of meters to hundreds of meters. Certainly, the AP may alternatively be deployed outdoors. The AP is equivalent to a bridge that connects a wired network and a wireless network, and a main function of the AP is to connect various wireless network clients together and then connect the wireless network to the Ethernet. For example, the AP may be a terminal device (for example, a mobile phone) or a network device (for example, a router) with a wireless fidelity (wireless fidelity, Wi-Fi) chip. In embodiments of this application, the AP may be a device that supports the 802.11be standard, or may be a device that supports a plurality of WLAN standards of the 802.11 family, such as 802.11ax, 802.11ay, 802.11ac, 802.11n, 802.11g, 802.11b, 802.11a, and a next generation of 802.11be.

The STA may be a wireless communication chip, a wireless sensor, a wireless communication terminal, or the like, and may also be referred to as a user. For example, the STA may be a mobile phone, a tablet computer, a set-top box, a smart television, a smart wearable device, a vehicle-mounted communication device, or a computer that supports a Wi-Fi communication function. Optionally, the STA may support the 802.11be standard, or may support a plurality of WLAN standards of the 802.11 family, such as 802.11 ax, 802.11ay, 802.11ac, 802.11n, 802.11g, 802.11b, 802.11a, and a next generation of 802.11be.

It may be understood that a quantity of APs and a quantity of STAs shown in FIG. 1 are merely examples, and there may be more or fewer APs and STAs.

The AP and the STAs in FIG. 1 may be communication apparatuses having a dual-mode communication function, that is, may be communication apparatuses having a low frequency (low frequency, LF) frequency band (or channel or link) communication mode and a high frequency (high frequency, HF) frequency band communication mode. Low frequency bands include, for example, sub 1 gigahertz (GHz), 2.4 GHz, 5 GHz, and 6 GHz, and high frequency bands include, for example, 45 GHz and 60 GHz.

For example, a communication apparatus having the dual-mode communication function may be a dual-band dual-concurrent (dual-band dual-concurrent, DBDC) device, or may be a multi-link device (multi-link device, MLD), which are described separately in the following.

### (1) DBDC device

The DBDC device integrates two sets of independent and complete links, and includes two sets of baseband processors and radio frequency front ends. Therefore, the DBDC device can operate independently in two frequency bands.

When both an AP and a STA are DBDC devices, for example, the AP is a DBDC device 1, and the STA is a DBDC device 2, the AP and the STA may exchange signaling on a low frequency link, to establish a low frequency link connection, and exchange signaling on a high frequency link, to establish a high frequency link connection.

### (2) MLD

In the IEEE 802.11be protocol, the MLD supports multi-link operation technologies, and the MLD has a plurality of radio frequency modules that separately operate in different frequency bands. For example, frequency bands in which the MLD operates may be all or a part of sub 1 GHz, 2.4 GHz, 5 GHz, 6 GHz, and a high frequency 60 GHz. The MLD may include an AP MLD and/or a non-access point (non-AP) MLD. For example, the non-AP MLD may be a STA MLD.

The AP MLD is used as an example. The AP MLD may include one or more affiliated (affiliated) stations, and each affiliated station has a respective media access control (media access control, MAC) address (address). As shown in FIG. 2, affiliated stations of an AP MLD include an AP 1 and an AP 2, a low (low) MAC address of the AP 1 is a link address 1, and a low MAC address of the AP 2 is a link address 2. In addition, the AP MLD also has an upper (upper) MAC address, which is referred to an MLD MAC address.

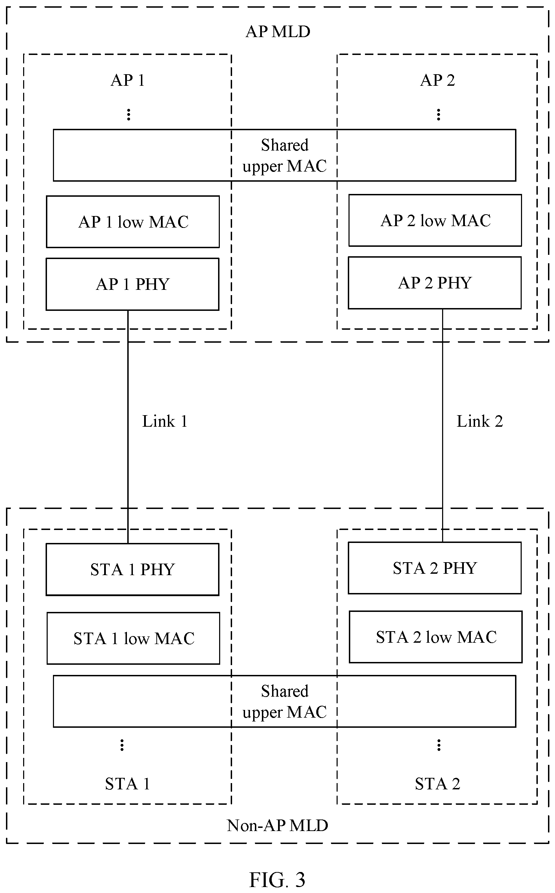

The AP MLD and the non-AP MLD may establish a multi-link connection by exchanging signaling on a low frequency link. As shown in FIG. 3, an AP MLD includes an AP 1 and an AP 2, the AP 1 includes an AP 1 PHY, an AP 1 low MAC, and an upper MAC, the AP 2 includes an AP 2 PHY, an AP 2 low MAC, and the upper MAC, and the AP 1 and the AP 2 share the upper MAC; and a non-AP MLD includes a STA 1 and a STA 2, the STA 1 includes a STA 1 PHY, a STA 1 low MAC, and an upper MAC, the STA 2 includes a STA 2 PHY, a STA 2 low MAC, and the upper MAC, the STA 1 and the STA 2 share the upper MAC, the AP 1 and the STA 1 are connected through a link 1, and the AP 2 and the STA 2 are connected through a link 2.

When a plurality of links are established, the non-AP MLD transmits an association request (association request) frame on the link 1, where the association request frame carries STA-side information of the link 1 and STA-side information of the link 2. For example, the association request frame may carry a multi-link element (multi-link element) field, and the multi-link element field is used to carry information about the non-AP MLD and information about a station in the non-AP MLD. The AP MLD transmits an association response (association response) frame on the link 1, and the association response frame carries AP-side information on a link 1 side and AP-side information on a link 2 side. In this way, the STA 1 and the STA 2 in the non-AP MLD respectively establish an association with the AP 1 and the AP 2 in the AP MLD.

As described in the background, because a path loss of a high frequency band is large, beamforming training needs to be performed when different devices communicate with each other in the high frequency band. In the network architecture shown in FIG. 1, when the AP initiates beamforming training, the AP may be referred to as an initiator (initiator), and the STA may be referred to as a responder (responder); or when the STA initiates beamforming training, the STA may be referred to as an initiator, and the AP may be referred to as a responder. In other words, a party that initiates beamforming training may be referred to as an initiator, and a party that responds to the beamforming training may be referred to as a responder. Optionally, in some other possible scenarios, a party that initiates beamforming training may be referred to as a responder, and a party that responds to the beamforming training may be referred to as an initiator. Alternatively, a party in beamforming training is always referred to as an initiator, and the other party in the beamforming training is always referred to as a responder; the initiator initiates beamforming training, or may respond to beamforming training initiated by the responder; and similarly, the responder also initiates beamforming training, and may also respond to beamforming training initiated by the initiator.

In existing short-range high frequency communication protocols (for example, the 802.11ad and 802.11ay protocols), beamforming training may include a sector level sweep (sector level sweep, SLS) process and/or a beam refinement protocol (beam refinement protocol, BRP) process. The following separately explains and describes the SLS process and the BRP process. These explanations are intended to facilitate understanding of embodiments of this application, and should not be considered as a limitation on the protection scope claimed in this application.

### (1) SLS process

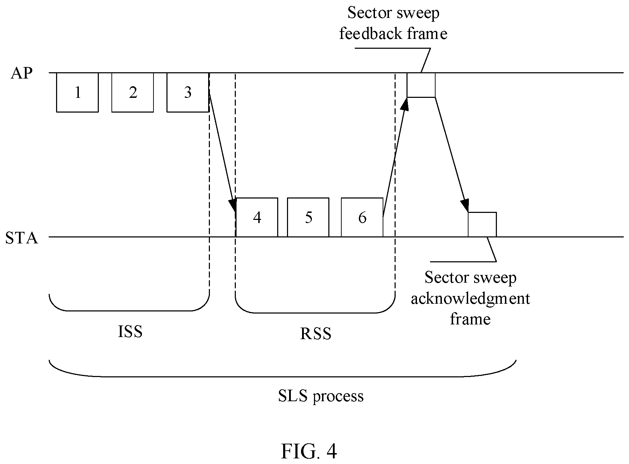

FIG. 4 is a diagram of a possible SLS process. As shown in FIG. 4, the SLS process includes four phases: an initiator sector sweep (initiator sector sweep, ISS) phase, a responder sector sweep (responder sector sweep, RSS) phase, a transmission phase of a sector sweep feedback (SSW Feedback) frame, and a transmission phase of a sector sweep acknowledgment (SSW acknowledgment, SSW Ack) frame. A basic link between an initiator and a responder is established through the four phases, the initiator may obtain an optimal transmit sector and an optimal receive sector that are of the initiator and that correspond to the responder, and the responder may also obtain an optimal transmit sector and an optimal receive sector that are of the responder and that correspond to the initiator, that is, a transmit beam and a receive beam may be selected, and gains of the transmit beam and the receive beam may be used. In embodiments of this application, an example in which an AP is an initiator and a STA is a responder is used.

The following separately describes the four phases in detail.

### (1.1) ISS phase

The ISS phase may include an initiator transmit sector sweep (initiator transmission of sector sweep, I-TXSS) subphase and/or an initiator receive sector sweep (initiator reception of sector sweep, I-RXSS) subphase. FIG. 4 is illustrated by using an example in which the ISS phase includes the I-TXSS subphase.

In the I-TXSS subphase, an AP may directionally transmit a plurality of SSW frames in a high frequency band, for example, an SSW frame 1, an SSW frame 2, and an SSW frame 3, to perform transmit sector training of the AP. For example, the AP may transmit one or more SSW frames in each of a plurality of transmit directions of the AP, and each transmit direction may correspond to one transmit antenna and one transmit sector of the transmit antenna. Correspondingly, a STA may quasi-omnidirectionally receive at least one SSW frame from the AP in the high frequency band, and then the STA may determine an optimal transmit antenna and an optimal transmit sector that are of the AP and that correspond to the STA, and feed back, to the AP, an identifier of the optimal transmit antenna and an identifier of the optimal transmit sector (for example, the identifiers may be fed back to the AP through an SSW frame in the R-TXSS subphase).

In the I-RXSS subphase, the AP may quasi-omnidirectionally transmit a plurality of SSW frames in a high frequency band, to perform receive sector training of the AP; and correspondingly, the STA may directionally receive at least one SSW frame in the high frequency band, and then the STA may determine, based on receiving quality of the at least one SSW frame, an optimal receive antenna and an optimal receive sector that are of the STA and that correspond to the AP.

It may be understood that the STA may select, based on an application scenario requirement, some antennas and some sectors to perform receive beam training, or perform coarse downlink receive beam training through sector combination. In addition, the STA may also choose, based on a status of the STA, to end downlink receive beam training in advance, to reduce power consumption.

For example, the receiving quality of the SSW frame may include at least one of the following: received signal power or strength, a signal to interference plus noise ratio (signal to interference plus noise ratio, SINR), a bit error rate, and the like.

It may be understood that the ISS (that is, the I-TXSS and/or the I-RXSS) may also be referred to as downlink beamforming training (downlink beamforming training, DL BFT). The optimal transmit antenna and the optimal transmit sector that are of the AP and that correspond to the STA are an optimal downlink transmit antenna and an optimal downlink transmit sector. The optimal receive antenna and the optimal receive sector that are of the STA and that correspond to the AP are an optimal downlink receive antenna and an optimal downlink receive sector.

### (1.2) RSS phase

The RSS phase may include a responder transmit sector sweep (responder transmission of sector sweep, R-TXSS) subphase and/or a responder receive sector sweep (responder reception of sector sweep, R-RXSS) subphase. FIG. 4 is illustrated by using an example in which the RSS phase includes the R-TXSS subphase.

In the R-TXSS subphase, the STA may directionally transmit a plurality of SSW frames in a high frequency band, for example, an SSW frame 4, an SSW frame 5, and an SSW frame 6, to perform transmit sector training of the STA; and correspondingly, the AP may quasi-omnidirectionally receive at least one SSW frame from the STA in the high frequency band, and then the AP may determine an optimal transmit antenna and an optimal transmit sector that are of the STA and that correspond to the AP, and feed back, to the STA, an identifier of the optimal transmit antenna and an identifier of the optimal transmit sector (for example, the identifiers may be fed back to the STA through a sector sweep feedback frame).

In the R-RXSS subphase, the STA may quasi-omnidirectionally transmit a plurality of SSW frames in a high frequency band, to perform receive sector training of the STA; and correspondingly, the AP may directionally receive at least one SSW frame in the high frequency band, and then the AP may determine an optimal receive antenna and an optimal receive sector that are of the AP and that correspond to the STA.

It may be understood that the RSS (that is, the R-TXSS and/or the R-RXSS) may also be referred to as uplink beamforming training (uplink beamforming training, UL BFT). The optimal transmit antenna and the optimal transmit sector that are of the STA and that correspond to the AP are an optimal uplink transmit antenna and an optimal uplink transmit sector. The optimal receive antenna and the optimal receive sector that are of the AP and that correspond to the STA are an optimal uplink receive antenna and an optimal uplink receive sector.

In embodiments of this application, "directionally transmitting" may mean alternately transmitting in different transmit sectors through different transmit antennas, and "directionally receiving" may mean alternately receiving in different receive sectors through different receive antennas.

### (1.3) Transmission phase of the sector sweep feedback frame

In the transmission phase of the sector sweep feedback frame, the AP may transmit the sector sweep feedback frame to the STA in a high frequency band based on an optimal transmit antenna and an optimal transmit sector that are of the AP and that correspond to the STA. The sector sweep feedback frame includes an identifier of the optimal transmit antenna that is of the STA and that corresponds to the AP and an identifier of the optimal transmit sector that is of the STA and that corresponds to the AP.

### (1.4) Transmission phase of the sector sweep acknowledgment frame

In the transmission phase of the sector sweep acknowledgment frame, the STA may transmit the sector sweep acknowledgment frame to the AP in a high frequency band based on an optimal transmit antenna and an optimal transmit sector that are of the STA and that correspond to the AP.

In this way, a result of the SLS phase may be acknowledged through the sector sweep feedback frame and the sector sweep acknowledgment frame. In addition, whether a BRP process needs to be performed may be further determined through the sector sweep feedback frame and the sector sweep acknowledgment frame.

The SSW frame transmitted in the SL S phase is used to perform a sector sweep function. In embodiments of this application, that the SSW frame performs the sector sweep function is used as an example. In another possible example, another possible frame defined in a current protocol, for example, a directional multi-gigabit (directional multi-gigabit, DMG) signal frame or a short SSW frame, may be used to perform the sector sweep function.

### (2) BRP process

To compensate for incorrect decision on an optimal sector caused by possible defects of a quasi-omnidirectional antenna, the BRP process may be performed after the SLS process. The BRP process may include a BRP establishment phase, a multiple sector identifier (multiple sector ID, MID) phase, and a beam combination (beam combining, BC) phase. The BRP process is usually used for receive beam training. In the MID phase, an AP (or a STA) quasi-omnidirectionally transmits a BRP frame, and the STA (or the AP) sequentially receives BRP frames in different receive sectors by using directional beams, and selects an optimal receive sector based on receiving quality. In the BC phase, an optimal transmit and receive beam pair may be detected in an optimal transmit sector and an optimal receive sector that are selected in the SLS and MID phases.

In other words, the SLS process is usually used for transmit beam training, and the BRP process is usually used for receive beam training and iterative refinement. If the AP or the STA uses only one transmit antenna mode, receive beam training may be performed as a part of the SLS phase.

It can be learned from the foregoing description that, in beamforming training, an AP and a STA need to exchange a large quantity of beamforming frames in a high frequency band. For example, the beamforming frames include a DMG beacon frame, an SSW frame, an SSW feedback frame, an SSW acknowledgment frame, and a BRP frame. Therefore, transmission efficiency in the high frequency band is affected.

In view of this, embodiments of this application provide a communication method, to complete beamforming training through mutual cooperation between a low frequency band and a high frequency band. This helps improve transmission efficiency in the high frequency band.

The following describes in detail the communication method provided in embodiments of this application with reference to specific embodiments. In the specific embodiments, an example in which the method provided in embodiments of this application is applied to the network architecture shown in FIG. 1 is used. In addition, the method may be executed by two communication apparatuses, and the two communication apparatuses are, for example, a first communication apparatus and a second communication apparatus. The first communication apparatus may be an AP or a communication apparatus that can support an AP in implementing a function required by the method, or certainly may be another communication apparatus, for example, a chip or a chip system; and the second communication apparatus may be a STA or a communication apparatus that can support a STA in implementing a function required by the method, or certainly may be another communication apparatus, for example, a chip or a chip system. Alternatively, the first communication apparatus may be a STA or a communication apparatus that can support a STA in implementing a function required by the method, or certainly may be another communication apparatus, for example, a chip or a chip system; and the second communication apparatus may be an AP or a communication apparatus that can support an AP in implementing a function required by the method, or certainly may be another communication apparatus, for example, a chip or a chip system.

### Embodiment 1

In Embodiment 1, an example in which a first communication apparatus is an AP and a second communication apparatus is a STA is used for description.

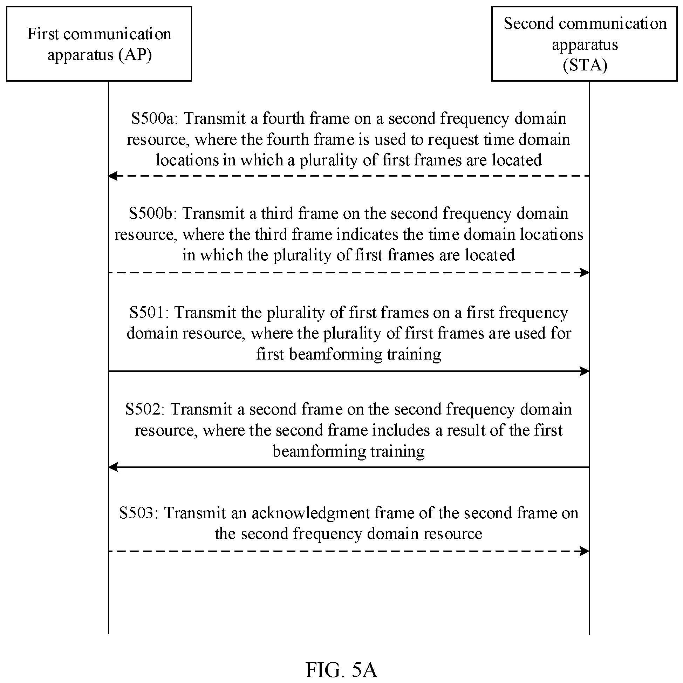

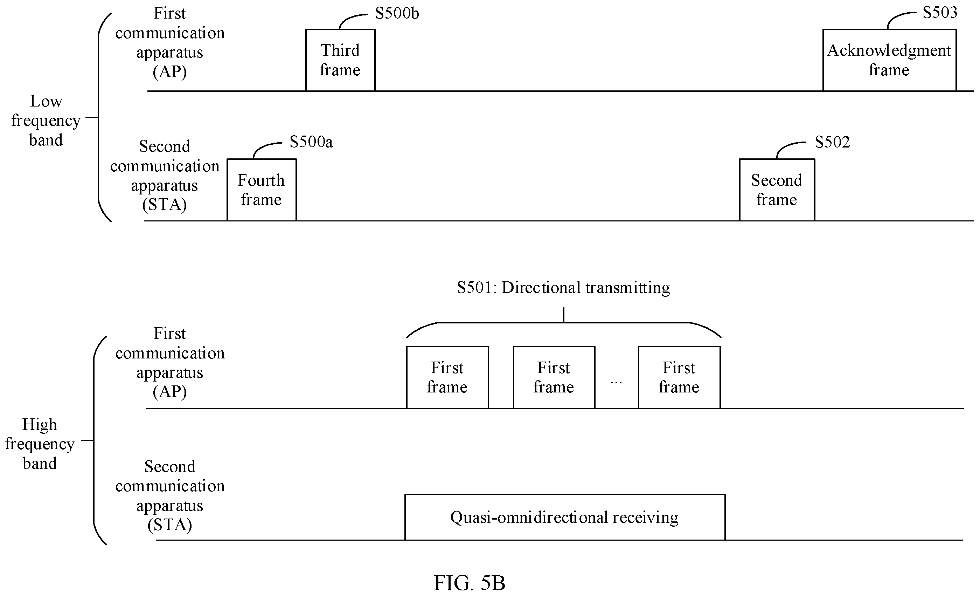

FIG. 5A and FIG. 5B each are a schematic flowchart corresponding to a communication method according to this embodiment of this application. As shown in FIG. 5A and FIG. 5B, the procedure may include the following steps.

S501: The AP transmits a plurality of first frames on a first frequency domain resource, where the plurality of first frames are used for first beamforming training; and correspondingly, the STA receives at least one first frame on the first frequency domain resource.

Herein, the first frequency domain resource is different from a second frequency domain resource below, and a frequency corresponding to the first frequency domain resource is higher than a frequency corresponding to the second frequency domain resource. A frequency domain resource may be understood as a frequency range, and that the frequency corresponding to the first frequency domain resource is higher than the frequency corresponding to the second frequency domain resource may mean that a lowest frequency corresponding to the first frequency domain resource is higher than a highest frequency corresponding to the second frequency domain resource. For example, the first frequency domain resource is a frequency domain resource in a high frequency band, and the second frequency domain resource is a frequency domain resource in a low frequency band.

In a possible implementation, the first beamforming training may be an initiator transmit sector sweep. For example, the first frame may be an SSW frame. In this case, the AP may directionally transmit the plurality of first frames on the first frequency domain resource. For example, the AP may separately transmit the plurality of first frames in a plurality of transmit sectors of the AP on the first frequency domain resource, that is, transmit one first frame in each transmit sector. This helps reduce sector sweep overheads. Certainly, the AP may alternatively transmit a plurality of first frames in each transmit sector. In this embodiment of this application, an example in which the AP transmits one first frame in each transmit sector is used.

Correspondingly, the STA may quasi-omnidirectionally receive the at least one first frame on the first frequency domain resource. It may be understood that although the AP quasi-omnidirectionally transmits the plurality of first frames on the first frequency domain resource, the STA may receive the plurality of first frames, or may receive only some of the plurality of first frames.

S502: The STA transmits a second frame to the AP on the second frequency domain resource, where the second frame includes a result of the first beamforming training; and correspondingly, the AP receives the second frame on the second frequency domain resource.

For example, after receiving the at least one first frame on the first frequency domain resource, the STA may determine the result of the first beamforming training based on receiving quality of the at least one first frame. When the first beamforming training is the initiator transmit sector sweep, the result of the first beamforming training indicates an optimal transmit antenna and/or an optimal transmit sector that are/is of the AP on the first frequency domain resource and that correspond/corresponds to the STA. For example, the result of the first beamforming training includes an identifier of the optimal transmit antenna that is of the AP on the first frequency domain resource and that corresponds to the STA and/or an identifier of the optimal transmit sector that is of the AP on the first frequency domain resource and that corresponds to the STA. For example, the optimal transmit antenna and/or the optimal transmit sector that are/is of the AP on the first frequency domain resource and that correspond/corresponds to the STA may be a transmit antenna and/or a transmit sector that correspond/corresponds to a first frame with best receiving quality (or a first frame whose receiving quality is greater than or equal to a preset threshold) in the at least one first frame.

Further, after determining the result of the first beamforming training, the STA may access a low frequency channel through contention, and further transmit the second frame to the AP in a unicast manner on the second frequency domain resource. For example, the second frame may be an SSW feedback frame.

In a possible implementation, in S501, the AP may transmit the plurality of first frames on the first frequency domain resource in a broadcast (or multicast, where broadcast is used as an example for description herein) manner, where the first frame includes a receiver address field, and a receiver address included in the receiver address field is a broadcast address (for example, when all bits of the receiver address field are set to 0, the receiver address is the broadcast address). In this case, a plurality of STAs may receive at least one first frame. Further, in S502, the plurality of STAs may separately transmit results of the first beamforming training to the AP on the second frequency domain resource. In this way, the AP transmits the plurality of first frames in the broadcast manner, so that beamforming training between the AP and the plurality of STAs can be simultaneously implemented. This helps improve beamforming training efficiency and reduce power consumption of the AP.

According to the foregoing method, the AP and the STA may transmit, in a high frequency band, a sweep frame for beamforming training, and transmit, in a low frequency band, a feedback frame for the beamforming training, so that the beamforming training is completed through mutual cooperation between the low frequency band and the high frequency band. This helps improve transmission efficiency in the high frequency band. In addition, because a coverage area of the low frequency band is large, transmission reliability of a beamforming training result is improved.

Optionally, after S502, the method further includes the following step.

S503: The AP transmits an acknowledgment frame of the second frame to the STA on the second frequency domain resource; and correspondingly, the STA receives the acknowledgment frame of the second frame on the second frequency domain resource.

For example, the acknowledgment frame of the second frame may be an SSW acknowledgment frame.

Optionally, before S501, the method further includes S500b, or further includes S500a and S500b.

S500a: The STA transmits a fourth frame to the AP on the second frequency domain resource, where the fourth frame includes scheduling request information, and the scheduling request information is used to request time domain locations in which the plurality of first frames are located; and correspondingly, the AP receives the fourth frame on the second frequency domain resource.

S500b: The AP transmits a third frame to the STA on the second frequency domain resource, where the third frame includes scheduling information, and the scheduling information indicates the time domain locations in which the plurality of first frames are located.

S500a is an optional step, that is, S500a may not be performed. For example, the AP may actively transmit the third frame to the STA on the second frequency domain resource, where the third frame includes the scheduling information. Optionally, the third frame may further include other possible information, for example, type information of the first beamforming training. For example, a type of the first beamforming training may be an I-TXSS, an I-RXSS, an R-TXSS, or an R-RXSS. In this embodiment, an example in which the first beamforming training is an I-TXSS is used for description.

Alternatively, S500a may be performed. For example, when determining that the first beamforming training needs to be performed, the STA may transmit the fourth frame to the AP, where the fourth frame is used to request to perform the first beamforming training (that is, request the time domain locations in which the plurality of first frames are located). For example, the fourth frame may include the type information of the first beamforming training. Correspondingly, after receiving the fourth frame, the AP may transmit the third frame to the STA based on the fourth frame.

In other words, before the AP and the STA perform the first beamforming training (for example, the I-TXSS), the AP may transmit the scheduling information to the STA in a low frequency band, and the scheduling information indicates a time domain location of the beamforming training (that is, the time domain locations of the plurality of first frames), so that the STA receives the first frames based on the time domain locations of the plurality of first frames. This avoids high power consumption of the STA caused by long-time detection because the STA does not know when the AP transmits the first frame.

### Embodiment 2

In Embodiment 2, an example in which a first communication apparatus is a STA and a second communication apparatus is an AP is used for description.

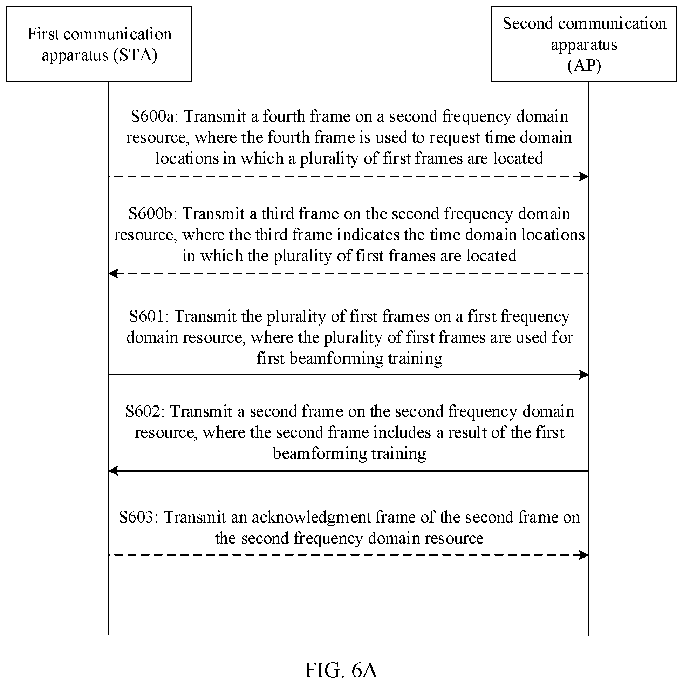

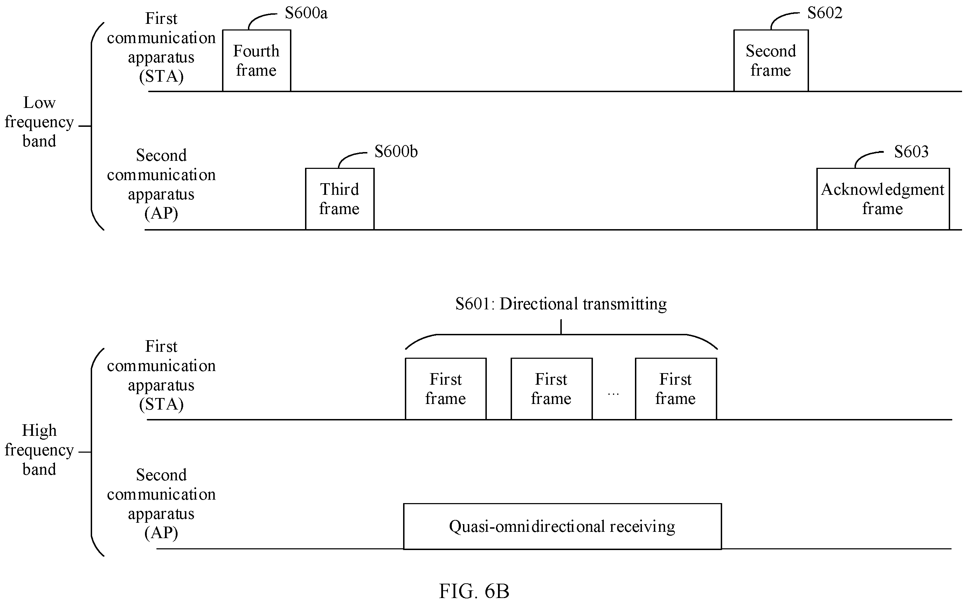

FIG. 6A and FIG. 6B each are a schematic flowchart corresponding to a communication method according to this embodiment of this application. As shown in FIG. 6A and FIG. 6B, the procedure may include the following steps.

S601: The STA transmits a plurality of first frames on a first frequency domain resource, where the plurality of first frames are used for first beamforming training; and correspondingly, the AP receives at least one first frame on the first frequency domain resource.

In a possible implementation, the first beamforming training may be a responder transmit sector sweep, and the first frame may be an SSW frame or a short SSW frame. In this case, the STA may directionally transmit the plurality of first frames on the first frequency domain resource. For example, the STA may separately transmit the plurality of first frames in a plurality of transmit sectors of the STA on the first frequency domain resource, that is, transmit one first frame in each transmit sector. This helps reduce sector sweep overheads. Certainly, the STA may alternatively transmit a plurality of first frames in each transmit sector. In this embodiment of this application, an example in which the STA transmits one first frame in each transmit sector is used.

Correspondingly, the AP may quasi-omnidirectionally receive the at least one first frame on the first frequency domain resource. It may be understood that although the STA quasi-omnidirectionally transmits the plurality of first frames on the first frequency domain resource, the AP may receive the plurality of first frames, or may receive only some of the plurality of first frames.

S602: The AP transmits a second frame to the STA on a second frequency domain resource, where the second frame includes a result of the first beamforming training; and correspondingly, the STA receives the second frame on the second frequency domain resource.

For example, after receiving the at least one first frame on the first frequency domain resource, the AP may determine the result of the first beamforming training based on receiving quality of the at least one first frame. When the first beamforming training is the responder transmit sector sweep, the result of the first beamforming training indicates an optimal transmit antenna and/or an optimal transmit sector that are/is of the STA on the first frequency domain resource and that correspond/corresponds to the AP.

Further, the AP may transmit the second frame to the STA in a unicast manner on the second frequency domain resource. For example, the second frame may be an SSW feedback frame.

According to the foregoing method, the STA and the AP may transmit, in a high frequency band, a sweep frame for beamforming training, and transmit, in a low frequency band, a feedback frame for the beamforming training, so that the beamforming training is completed through mutual cooperation between the low frequency band and the high frequency band. This helps improve transmission efficiency in the high frequency band. In addition, because a coverage area of the low frequency band is large, transmission reliability of a beamforming training result is improved.

Optionally, after S602, the method further includes the following step.

S603: The STA transmits an acknowledgment frame of the second frame to the AP on the second frequency domain resource; and correspondingly, the AP receives the acknowledgment frame of the second frame on the second frequency domain resource.

Optionally, before S601, the method further includes S600b, or further includes S600a and S600b.

S600a: The STA transmits a fourth frame to the AP on the second frequency domain resource, where the fourth frame includes scheduling request information, and the scheduling request information is used to request time domain locations in which the plurality of first frames are located; and correspondingly, the AP receives the fourth frame on the second frequency domain resource.

S600b: The AP transmits a third frame to the STA on the second frequency domain resource, where the third frame includes scheduling information, and the scheduling information indicates the time domain locations in which the plurality of first frames are located.

In other words, before the AP and the STA perform the first beamforming training, the AP may transmit the scheduling information to the STA in a low frequency band, and the scheduling information indicates a time domain location of the beamforming training (that is, the time domain locations of the plurality of first frames), so that the AP receives the first frame based on the time domain locations of the plurality of first frames. This avoids high power consumption of the AP caused by long-time detection because the AP does not know when the STA transmits the first frame.

For the foregoing embodiments, the following aspects may be understood.
(1) Embodiment 1 is described by using an example in which the first beamforming training is the initiator transmit sector sweep, and Embodiment 2 is described by using an example in which the first beamforming training is the responder transmit sector sweep; for specific implementations of an initiator receive sector sweep and a responder receive sector sweep, reference may be made to Embodiment 1 or Embodiment 2; and the initiator receive sector sweep is used as an example, and a difference between the initiator receive sector sweep and the initiator transmit sector sweep lies in that: In the initiator receive sector sweep, after determining the optimal receive antenna and the optimal receive sector that are of the STA on the first frequency domain resource and that correspond to the AP, the STA does not need to feed back a result of the initiator receive sector sweep to the AP.

In a possible implementation, the AP and the STA may separately and independently perform various types of beamforming training (for example, an initiator transmit sector sweep, an initiator receive sector sweep, a responder transmit sector sweep, and a responder receive sector sweep), and there is no limitation on an execution sequence of the various types of beamforming training.

In still another possible implementation, the AP and the STA may first perform the second beamforming training, and then perform the first beamforming training.

For example, the first beamforming training is an initiator transmit sector sweep, and the second beamforming training is an initiator receive sector sweep. In this case, the AP and the STA may first perform the initiator receive sector sweep, and then the STA may determine an optimal receive antenna and an optimal receive sector that are of the STA on the first frequency domain resource and that correspond to the AP. Further, the AP and the STA may perform the initiator transmit sector sweep. In this case, the AP may directionally transmit a plurality of first frames on the first frequency domain resource, and the STA may determine, based on the optimal receive antenna and the optimal receive sector that are of the STA on the first frequency domain resource and that correspond to the AP, to receive at least one first frame (that is, different from quasi-omnidirectional receiving of at least one first frame by the STA described in Embodiment 1).

That is, in the initiator transmit sector sweep, the STA may directionally receive the at least one first frame in a high frequency band based on only the optimal receive antenna and the optimal receive sector, and determine, based on receiving quality of the at least one first frame, an optimal transmit antenna and an optimal transmit sector that are of the AP on the first frequency domain resource and that correspond to the STA. In this way, compared with a solution in which the STA quasi-omnidirectionally receives at least one first frame, this manner can significantly reduce beamforming training time, and reduce power consumption of the STA.

For another example, the first beamforming training is a responder transmit sector sweep, and the second beamforming training is a responder receive sector sweep. In this case, the AP and the STA may first perform the responder receive sector sweep, and then the AP may determine an optimal receive antenna and an optimal receive sector that are of the AP on the first frequency domain resource and that correspond to the STA. Further, the AP and the STA may perform the responder transmit sector sweep. In this case, the STA may directionally transmit a plurality of first frames on the first frequency domain resource, and the AP may determine, based on the optimal receive antenna and the optimal receive sector that are of the AP on the first frequency domain resource and that correspond to the STA, to receive at least one first frame (that is, different from quasi-omnidirectional receiving of at least one first frame by the AP described in Embodiment 2). This can prevent the AP from quasi-omnidirectionally detecting a beamforming training frame in a high frequency band in a beamforming training process, and further improve a coverage area of a high frequency device.

That is, in the responder transmit sector sweep, the AP may directionally receive the at least one first frame in a high frequency band based on only the optimal receive antenna and the optimal receive sector, and determine, based on receiving quality of the at least one first frame, an optimal transmit antenna and an optimal transmit sector that are of the STA on the first frequency domain resource and that correspond to the AP. In this way, compared with a solution in which the AP quasi-omnidirectionally receives at least one first frame, this manner can significantly reduce beamforming training time, and reduce power consumption of the AP.

(2) After DL-BFT (for example, an initiator transmit sector sweep and an initiator receive sector sweep) is completed, for a device with a symmetric antenna system, a UL-BFT result may be determined based on a DL-BFT result. Therefore, UL-BFT (for example, a responder transmit sector sweep and a responder receive sector sweep) may not be performed. This helps reduce power consumption of the AP and the STA and transmission resource overheads.

(3) The foregoing is described by using the first beamforming training as an initiator transmit sector sweep or a responder transmit sector sweep. In another possible embodiment, the first beamforming training may alternatively be beamforming training related to a BRP process. This is not specifically limited.

(4) The solutions described in Embodiment 1 and Embodiment 2 are merely some examples of mutual cooperation between a low frequency band and a high frequency band, and mutual cooperation between a high frequency band and a low frequency band may also be applicable to other possible scenarios. For example, signaling used in a BRP establishment phase is exchanged in a low frequency band, and MID and BC phases are performed in a high frequency band. For another example, a beacon frame used for a high frequency band is broadcast in a low frequency band.

(5) The foregoing focuses on a difference between Embodiment 1 and Embodiment 2. For other content except the difference, mutual reference may be made between Embodiment 1 and Embodiment 2. In addition, in a same embodiment, mutual reference may also be made between different implementations or different examples.

(6) Step numbers in the flowcharts described in Embodiment 1 and Embodiment 2 are merely examples of execution procedures and do not constitute a limitation on an execution sequence of the steps. In embodiments of this application, there is no strict execution sequence between steps that have no time sequence dependency relationship with each other. Not all the steps shown in the flowcharts are mandatory steps. Some steps may be deleted from the flowcharts based on an actual requirement, or another possible step may be added to the flowcharts based on an actual requirement.

The foregoing mainly describes the solutions provided in embodiments of this application from a perspective of interaction between communication apparatuses. It may be understood that, to implement the foregoing functions, the first communication apparatus and the second communication apparatus may include corresponding hardware structures and/or software modules for performing the functions. A person skilled in the art should be easily aware that, in combination with the examples described in embodiments disclosed in this specification, units, algorithms, and steps may be implemented by hardware or a combination of hardware and computer software in embodiments of this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the first communication apparatus and the second communication apparatus may be divided into functional units based on the foregoing method examples. For example, each functional unit may be obtained through division based on each corresponding function, or two or more functions may be integrated into one unit. The integrated unit may be implemented in a form of hardware, or may be implemented in a form of a software functional unit.

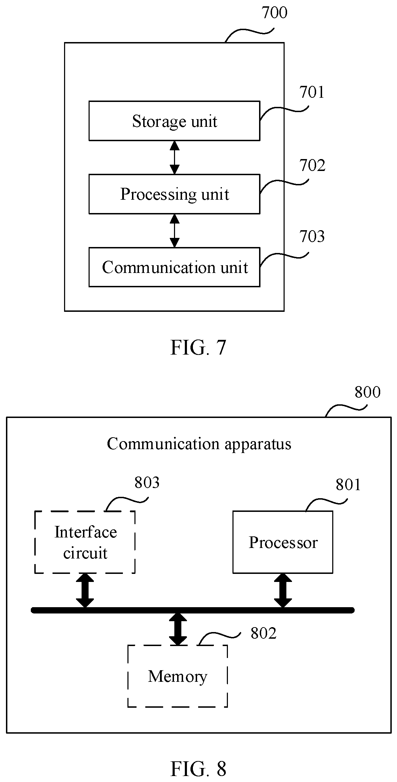

FIG. 7 is a possible example block diagram of an apparatus according to an embodiment of this application. As shown in FIG. 7, the apparatus 700 may include a processing unit 702 and a communication unit 703. The processing unit 702 is configured to control and manage an action of the apparatus 700. The communication unit 703 is configured to support the apparatus 700 in communicating with another device. Optionally, the communication unit 703 is also referred to as a transceiver unit, and may include a receiving unit and/or a transmitting unit, respectively configured to perform a receiving operation and a transmitting operation. The apparatus 700 may further include a storage unit 701 configured to store program code and/or data of the apparatus 700.

The apparatus 700 may be the first communication apparatus (for example, an AP) in the foregoing embodiments, or may be a component (for example, a circuit or a chip) disposed in an AP. The processing unit 702 may support the apparatus 700 in performing actions of the AP in the foregoing method examples. Alternatively, the processing unit 702 mainly performs internal actions of the AP in the method examples, and the communication unit 703 may support communication between the apparatus 700 and another device.

For example, in an embodiment, the communication unit 703 is configured to: transmit a plurality of first frames on a first frequency domain resource, where the plurality of first frames are used for first beamforming training; and receive a second frame from a second communication apparatus on a second frequency domain resource, where the second frame includes a result of the first beamforming training, and a frequency corresponding to the first frequency domain resource is higher than a frequency corresponding to the second frequency domain resource.

The apparatus 700 may be the second communication apparatus (for example, a STA) in the foregoing embodiments, or may be a component (for example, a circuit or a chip) disposed in a STA. The processing unit 702 may support the apparatus 700 in performing actions of the STA in the foregoing method examples. Alternatively, the processing unit 702 mainly performs internal actions of the STA in the method examples, and the communication unit 703 may support communication between the apparatus 700 and another device.

In an embodiment, the communication unit 703 is configured to: receive at least one first frame from a first communication apparatus on a first frequency domain resource, where the at least one first frame is used for first beamforming training; and transmit a second frame to the first communication apparatus on a second frequency domain resource, where the second frame includes a result of the first beamforming training, and a frequency corresponding to the first frequency domain resource is higher than a frequency corresponding to the second frequency domain resource.

It should be understood that division into the units in the foregoing apparatus is merely logical function division, and during actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, units each may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. In an implementation process, operations in the foregoing methods or the foregoing units may be implemented by using a hardware integrated logic circuit in a processor element or may be implemented by using software invoked by a processing element.

In an example, a unit in any one of the foregoing apparatuses may be one or more integrated circuits configured to implement the foregoing methods, for example, one or more application-specific integrated circuits (application-specific integrated circuit, ASIC), one or more microprocessors (digital signal processor, DSP), one or more field programmable gate arrays (field programmable gate array, FPGA), or a combination of at least two of these forms of integrated circuits. For another example, when the units in the apparatus may be implemented in a form in which a processing element schedules a program, the processing element may be a processor, for example, a general-purpose central processing unit (central processing unit, CPU) or another processor that can invoke the program. For still another example, the units may be integrated and implemented in a form of a system-on-a-chip (system-on-a-chip, SOC).

The foregoing unit configured for receiving is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit configured for transmitting is an interface circuit of the apparatus, and is configured to transmit a signal to another apparatus. For example, when the apparatus is implemented in a manner of a chip, the transmitting unit is an interface circuit that is of the chip and that is configured to transmit a signal to another chip or apparatus.

FIG. 8 is a diagram of a structure of a communication apparatus according to an embodiment of this application. The communication apparatus is configured to implement operations of the first communication apparatus (for example, an AP) in the foregoing embodiments.

As shown in FIG. 8, a communication apparatus 800 may include a processor 801, a memory 802, and an interface circuit 803. The processor 801 may be configured to: process a communication protocol and communication data, and control the communication apparatus 800. The memory 802 may be configured to store a program and data, and the processor 801 may perform, based on the program, methods performed by the AP in embodiments of this application. The interface circuit 803 may be used by the communication apparatus 800 to communicate with another device, the communication may be wired communication or wireless communication, and the interface circuit may alternatively be replaced with a transceiver.

Alternatively, the memory 802 may be externally connected to the communication apparatus 800. In this case, the communication apparatus 800 may include the interface circuit 803 and the processor 801. Alternatively, the interface circuit 803 may be externally connected to the communication apparatus 800. In this case, the communication apparatus 800 may include the memory 802 and the processor 801. When both the interface circuit 803 and the memory 802 are externally connected to the communication apparatus 800, the communication apparatus 800 may include the processor 801.

The communication apparatus shown in FIG. 8 can implement processes related to the AP in the foregoing method embodiments. Operations and/or functions of modules in the communication apparatus shown in FIG. 8 are separately used to implement corresponding procedures in the foregoing method embodiments. For details, refer to descriptions in the foregoing method embodiments. To avoid repetition, detailed descriptions are properly omitted herein.

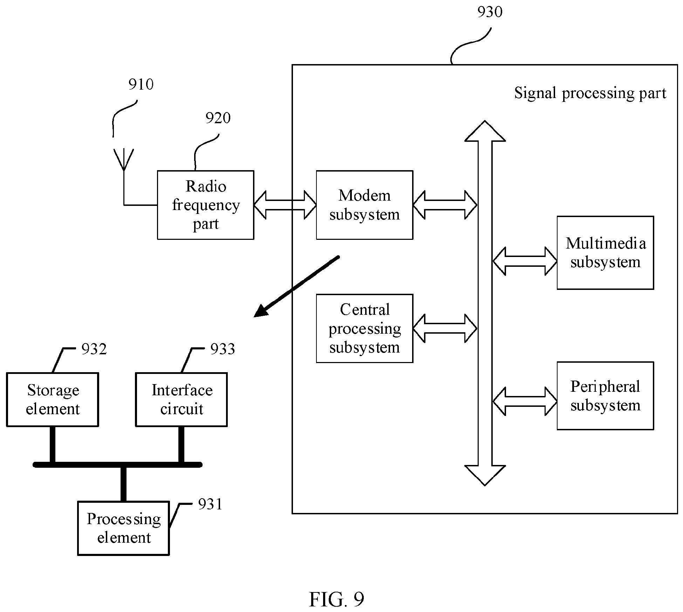

FIG. 9 is a diagram of a structure of a communication apparatus according to an embodiment of this application. The communication apparatus is configured to implement operations of the second communication apparatus (for example, a STA) in the foregoing embodiments. As shown in FIG. 9, the communication apparatus includes an antenna 910, a radio frequency part 920, and a signal processing part 930. The antenna 910 is connected to the radio frequency part 920. In a downlink direction, the radio frequency part 920 receives, through the antenna 910, information transmitted by an AP, and transmits the information transmitted by the AP to the signal processing part 930 for processing. In an uplink direction, the signal processing part 930 processes information about a STA, and transmits the information about the STA to the radio frequency part 920, and after the radio frequency part 920 processes the information about the STA, the radio frequency part 920 transmits the information to the AP through the antenna 910.

The signal processing part 930 may include a modem subsystem configured to process data at communication protocol layers, and may further include a central processing subsystem configured to process an operating system and an application layer of the STA. In addition, the signal processing part 930 may further include another subsystem, for example, a multimedia subsystem or a peripheral subsystem. The multimedia subsystem is configured to control a camera, screen display, and the like, and the peripheral subsystem is configured to connect to another device. The modem subsystem may be a separately disposed chip.

The modem subsystem may include one or more processing elements 931, for example, include one main control CPU and another integrated circuit. In addition, the modem subsystem may further include a storage element 932 and an interface circuit 933. The storage element 932 is configured to store data and a program. However, the program used to perform methods performed by the STA in the foregoing methods may not be stored in the storage element 932, but is stored in a memory outside the modem subsystem, and when the program is used, the program is loaded and used by the modem subsystem. The interface circuit 933 is configured to communicate with another subsystem.

The modem subsystem may be implemented by using a chip. The chip includes at least one processing element and an interface circuit. The processing element is configured to perform steps of any method performed by the STA, and the interface circuit is configured to communicate with another apparatus. In an implementation, units that are of the STA and that implement the steps in the foregoing methods may be implemented in a form of scheduling a program by a processing element. For example, an apparatus used in the STA includes a processing element and a storage element, and the processing element invokes a program stored in the storage element, to perform the methods performed by the STA in the foregoing method embodiments. The storage element may be a storage element located on a same chip as the processing element, that is, an on-chip storage element.

In another implementation, the program used to perform the methods performed by the STA in the foregoing methods may be in a storage element located on a different chip from the processing element, that is, an off-chip storage element. In this case, the processing element invokes or loads the program from the off-chip storage element to the on-chip storage element, to invoke and perform the methods performed by the STA in the foregoing method embodiments.

In still another implementation, units that are of the STA and that implement the steps in the foregoing methods may be configured as one or more processing elements, these processing elements are disposed on the modem subsystem, and the processing elements herein may be integrated circuits, for example, one or more ASICs, one or more DSPs, one or more FPGAs, or a combination of these integrated circuits. These integrated circuits may be integrated together to form a chip.

Units that are of the STA and that implement the steps in the foregoing methods may be integrated together and implemented in a form of an SOC, and the SOC chip is configured to implement the foregoing methods. At least one processing element and a storage element may be integrated into the chip, and the processing element invokes a program stored in the storage element to implement the foregoing methods performed by the STA; or at least one integrated circuit may be integrated into the chip, to implement the foregoing methods performed by the STA; or with reference to the foregoing implementations, functions of some units are implemented by invoking a program by the processing element, and functions of some units are implemented in a form of an integrated circuit.

It can be learned that the foregoing apparatus used for the STA may include at least one processing element and an interface circuit, and the at least one processing element is configured to perform any method performed by the STA in the foregoing method embodiments. The processing element may perform some or all of the steps performed by the STA in a first manner, that is, by invoking a program stored in the storage element; or may perform some or all of the steps performed by the STA in a second manner, that is, by using a hardware integrated logic circuit in a processor element in combination with instructions. Certainly, some or all of the steps performed by the STA may alternatively be performed by combining the first manner and the second manner.

The processing element herein is the same as that described above, and may be implemented by using a processor. A function of the processing element may be the same as a function of the processing unit described in FIG. 7. For example, the processing element may be a general-purpose processor, for example, a CPU, or may be one or more integrated circuits configured to implement the foregoing method, for example, one or more ASICs, one or more microprocessors DSPs, one or more FPGAs, or a combination of at least two of the integrated circuit forms. The storage element may be implemented by using a memory, and a function of the storage element may be the same as a function of the storage unit described in FIG. 7. The storage element may be one memory, or a general term of a plurality of memories.

The STA shown in FIG. 9 can implement processes related to the STA in the foregoing method embodiments. Operations and/or functions of modules in the STA shown in FIG. 9 are separately used to implement corresponding procedures in the foregoing method embodiments. For details, refer to descriptions in the foregoing method embodiments. To avoid repetition, detailed descriptions are properly omitted herein.

An embodiment of this application further provides a communication system. The communication system may include an AP and a STA, the AP is configured to perform AP-side steps in the foregoing method embodiments, and the STA is configured to perform STA-side steps in the foregoing method embodiments.

The terms "system" and "network" may be used interchangeably in embodiments of this application. "At least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists, where A and B may be singular or plural. The character "/" generally indicates an "or" relationship between associated objects. At least one of the following items (pieces) or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A communication method, wherein the method comprises:
transmitting, by a first communication apparatus, a plurality of first frames on a first frequency domain resource, wherein the plurality of first frames are used for first beamforming training; and
receiving, by the first communication apparatus, a second frame from a second communication apparatus on a second frequency domain resource, wherein the second frame comprises a result of the first beamforming training, and
a frequency corresponding to the first frequency domain resource is higher than a frequency corresponding to the second frequency domain resource.

2. The method according to claim 1, wherein the method further comprises:
transmitting, by the first communication apparatus, a third frame to the second communication apparatus on the second frequency domain resource, wherein the third frame indicates time domain locations in which the plurality of first frames are located.

3. The method according to claim 2, wherein the method further comprises:
receiving, by the first communication apparatus, a fourth frame from the second communication apparatus on the second frequency domain resource, wherein the fourth frame is used to request the time domain locations in which the plurality of first frames are located.

4. The method according to any one of claims 1 to 3, wherein the method further comprises:
transmitting, by the first communication apparatus, an acknowledgment frame of the second frame to the second communication apparatus on the second frequency domain resource.

5. The method according to any one of claims 1 to 4, wherein the transmitting, by a first communication apparatus, a plurality of first frames on a first frequency domain resource comprises:
transmitting, by the first communication apparatus, the plurality of first frames in a broadcast manner on the first frequency domain resource.

6. The method according to any one of claims 1 to 5, wherein before the transmitting, by a first communication apparatus, a plurality of first frames on a first frequency domain resource, the method further comprises:
transmitting, by the first communication apparatus, a plurality of fifth frames on the first frequency domain resource, wherein the plurality of fifth frames are used for second beamforming training.

7. The method according to any one of claims 1 to 6, wherein the transmitting, by the first communication apparatus, a plurality of fifth frames on the first frequency domain resource comprises:
transmitting, by the first communication apparatus, the plurality of fifth frames in the broadcast manner on the first frequency domain resource.

8. A communication method, wherein the method comprises:
receiving, by a second communication apparatus, at least one first frame from a first communication apparatus on a first frequency domain resource, wherein the at least one first frame is used for first beamforming training; and
transmitting, by the second communication apparatus, a second frame to the first communication apparatus on a second frequency domain resource, wherein the second frame comprises a result of the first beamforming training, and
a frequency corresponding to the first frequency domain resource is higher than a frequency corresponding to the second frequency domain resource.

9. The method according to claim 8, wherein the method further comprises:
receiving, by the second communication apparatus, a third frame from the first communication apparatus on the second frequency domain resource, wherein the third frame indicates a time domain location in which the at least one first frame is located.

10. The method according to claim 9, wherein the method further comprises:
transmitting, by the second communication apparatus, a fourth frame to the first communication apparatus on the second frequency domain resource, wherein the fourth frame is used to request the time domain location in which the at least one first frame is located.

11. The method according to any one of claims 8 to 10, wherein the method further comprises:
receiving, by the second communication apparatus, an acknowledgment frame of the second frame from the first communication apparatus on the second frequency domain resource.

12. The method according to any one of claims 8 to 11, wherein the receiving, by a second communication apparatus, at least one first frame from a first communication apparatus on a first frequency domain resource further comprises:
receiving, by the second communication apparatus, at least one fifth frame from the first communication apparatus on the first frequency domain resource, wherein the at least one fifth frame is used for second beamforming training;
determining, by the second communication apparatus, a result of the second beamforming training based on receiving quality of the at least one fifth frame, wherein the result indicates an optimal receive antenna and/or an optimal receive sector that are/is of the second communication apparatus on the first frequency domain resource and that correspond/corresponds to the first communication apparatus, and
receiving, by the second communication apparatus, the at least one first frame from the first communication apparatus on the first frequency domain resource based on the optimal receive antenna and/or the optimal receive sector.

13. A communication apparatus, comprising a processor, wherein the processor is coupled to a memory, the memory stores a computer program, and the processor is configured to invoke the computer program in the memory, to enable the communication apparatus to perform the method according to any one of claims 1 to 7 or the method according to any one of claims 8 to 12.

14. A computer-readable storage medium, wherein the storage medium stores a computer program or instructions, and when the computer program or the instructions are executed by a computer, the method according to any one of claims 1 to 7 or the method according to any one of claims 8 to 12 is implemented.

15. A computer program product, wherein when a computer reads and executes the computer program product, the computer is enabled to perform the method according to any one of claims 1 to 7 or the method according to any one of claims 8 to 12.
